# EUROPEAN PATENT SPECIFICATION

(11) **EP 1 279 812 B1**
(45) Date of publication and mention of the grant of the patent: **20.08.2008**
(21) Application number: 02016321.8
(22) Date of filing: 24.07.2002
(51) Int. Cl.: F02D 9/10

(54) **Intake air control devices for internal combustion engines**
Ansaugluftsteuervorrichtung für eine Brennkraftmaschine
Dispositif de commande de l'air d'admission pour un moteur à combustion interne

(30) Priority: 24.07.2001 JP 2001223356
(43) Date of publication of application: 29.01.2003
(73) Proprietor: AISAN KOGYO KABUSHIKI KAISHA, Obu-shi, Aichi 474-8588 (JP); KABUSHIKI KAISHA TOYOTA JIDOSHOKKI, Kariya-shi, Aichi-ken (JP)
(72) Inventor: Shimizu, Takahiro, Aisan Kogyo K.K., Obu-shi, Aichi-ken 474-8588 (JP); Matsumura, Daisuke, Aisan Kogyo K.K., Obu-shi, Aichi-ken 474-8588 (JP); Yamamoto, Hiroki, Aisan Kogyo K.K., Obu-shi, Aichi-ken 474-8588 (JP); Noda, Motonori, K.K. Toyota Jidoshokki, Kariya-shi, Aichi-ken (JP)
(74) Representative: Kramer - Barske - Schmidtchen

(56) References cited:
- US-A- 2 080 440
- PATENT ABSTRACTS OF JAPAN vol. 002, no. 021 (M-007), 10 February 1978 (1978-02-10) -& JP 52 137535 A (FUJI HEAVY IND LTD), 17 November 1977 (1977-11-17)
- PATENT ABSTRACTS OF JAPAN vol. 017, no. 517 (M-1481), 17 September 1993 (1993-09-17) -& JP 05 133234 A (AISAN IND CO LTD), 28 May 1993 (1993-05-28)

## Description

The present invention relates to intake air control devices for internal combustion engines.

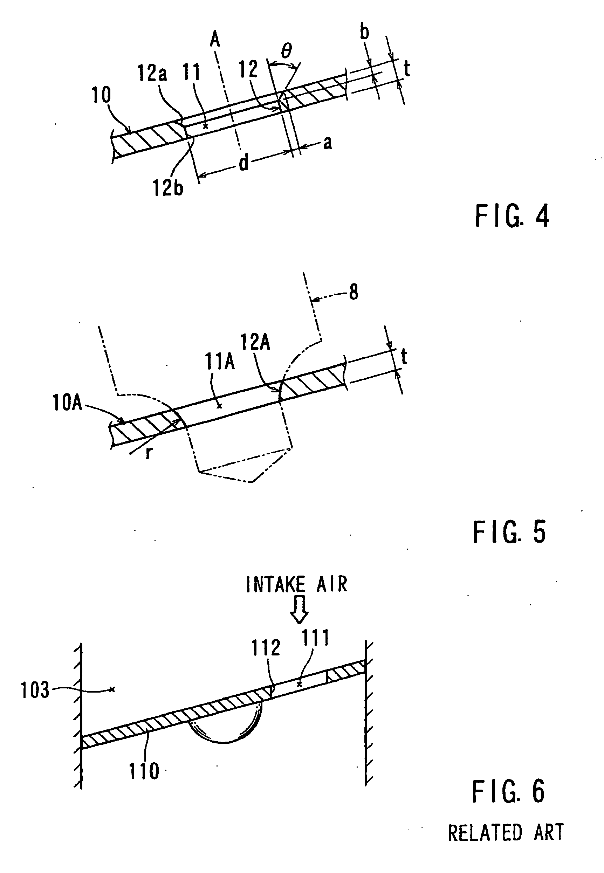

A cross-section of a known intake air control device is shown in Fig. 6. The known device includes a valve member 110 that opens and closes an intake air channel 103 of an internal combustion engine. A circular orifice 111 is defined within the valve member 110 and serves to generate a strong directional swirl of the suction air when the valve member 110 is fully closed. For example, Japanese Laid-Open Utility Model Publication No. 1-118128 teaches such a known intake air control device.

However, in the known intake air control device, the circumferential wall 112 of the orifice 111 has a simple straight cylindrical configuration.

The present inventors have performed several experiments in order to determine how the shape of the orifice 111 affects the flow of the air through the orifice 111. As a result, they found that the air flowing through the orifice 111 may stagnate if the circumferential wall 112 has a simple straight cylindrical configuration. Further, such stagnation may result in deposition of combustion products or impurities on the circumferential wall 112 of the orifice 111. When combustion products or impurities are deposited on the circumferential wall 112 of the orifice 111, the flow rate of the intake air through the orifice 111 may be reduced. In this case, the required air flow rates for the engine cannot be ensured in some cases.

Patent Abstracts of Japan JP 52 137535 A discloses a carburettor with a disc rotatably mounted downstream of a venturi means, within which fuel droplets are sucked in by the accelerated air flow. The disc may be turned at low load such that the mixture of air and fuel droplets impinge upon the disc and flow through small orifices formed in the disc with their circumferential walls comprising a bevelled region within which the flow through cross section is decreasing in the flow direction.

US 2,080,440 also is related to a carburettor. This carburettor is provided with a throttle valve downstream a venturi means, the throttle valve comprising a valve member provided with a multiplicity of orifices provided in a bottom face of a circumferential groove being formed at the side of the valve disc facing to the venturi means. The width of the circumferential groove is bigger than the constant diameter of an orifice, so that there is a step in the flow-through cross section.

Therefore, it is one object of the present invention to teach improved intake air control devices for internal combustion engines so as to minimize the deposition of combustion products or impurities on a circumferential wall of an orifice defined within a valve member.

Another object of the present invention is to improve the swirl flow, generated at the drown-stream side of a valve member of an intake air control device.

A solution of this problem is achieved by an intake air control device according to claim

A deposition of combustion products or impurity can be prevented by the inventive forming the circumferential wall of the orifice. This inventive form prevents any stagnation in the intake air flow through the orifice, whereby the deposition of combustion products or impurities of the circumferential wall of the orifice may be minimized or completely eliminated. Furthermore, the speed of the inflow air is increased, which enhances the swirl inflow.

Subclaims 2 to 7 are directed towards advantageous embodiments of the inventive intake air control device.

According to an aspect of the present teachings, intake air control devices are taught that include a valve member rotatably disposed within an air intake channel of an internal combustion engine. The valve member may be operable to open and close the air intake channel. At least one orifice is defined within the valve member. The circumferential wall of the orifice preferably includes at least one wall portion that defines an open area. The cross-section (size) of the open area preferably decreases in the direction from an upstream side to a downstream side of the valve member. In this case, as the intake air flows through the wall portion, the flow rate of the intake air will increase. As a result, stagnation in the intake air that flows through the orifice may be minimized, thereby minimizing or eliminating the deposition of combustion products or impurities on the circumferential wall of the orifice.

Additional objects, features and advantages of the present invention will be readily understood after reading the following detailed description together with the claims and the accompanying drawings, in which:
FIG. 1 is a front view of a first representative intake air control device for an internal combustion engine;
FIG. 2 is a cross-sectional view of a portion of the first representative intake air control device;
FIG. 3 is a plan view of a valve member of the first representative intake air control device;
FIG. 4 is a partial, cross-sectional view of the valve member having an orifice;
FIG. 5 is a view similar to FIG. 4, but instead showing a partial, cross-sectional view of a valve member having an orifice of a second representative intake air control device; and
FIG. 6 is a cross-sectional view of a portion of a known intake air control device.

In one embodiment of the present teachings, intake air control devices may include at least one valve member. The valve member is rotatably disposed within a corresponding air intake port that is formed in a valve body. The valve body is preferably arranged and constructed to be mounted on an internal combustion engine. The valve member may be operable to open and close the air intake port. At least one orifice may be defined within the valve member. The orifice preferably includes a circumferential wall having at least one wall portion that defines an open area (opening). The cross-section (size) of the open area (opening) preferably decreases in the direction from an upstream side to a downstream side of the valve member. In this case, as the intake air flows through the orifice, the flow rate of the intake air will increase. As a result, stagnation in the intake air that flows through the orifice may be minimized to consequently minimize the deposition of combustion products or impurities on the circumferential wall of the orifice.

In another embodiment of the present teachings, the wall portion may define a linear inclined or beveled surface as viewed in a cross-sectional view along an axis of the orifice.

In another embodiment of the present teachings, the wall portion may define a convexly curved surface as viewed in a cross-sectional view along an axis of the orifice.

Each of the additional features and teachings disclosed above and below may be utilized separately or in conjunction with other features and teachings to provide improved intake air control devices and methods for designing and using such control devices. Representative examples of the present invention, which examples utilize many of these additional features and teachings both separately and in conjunction, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detail description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

### FIRST REPRESENTATIVE EMBODIMENT

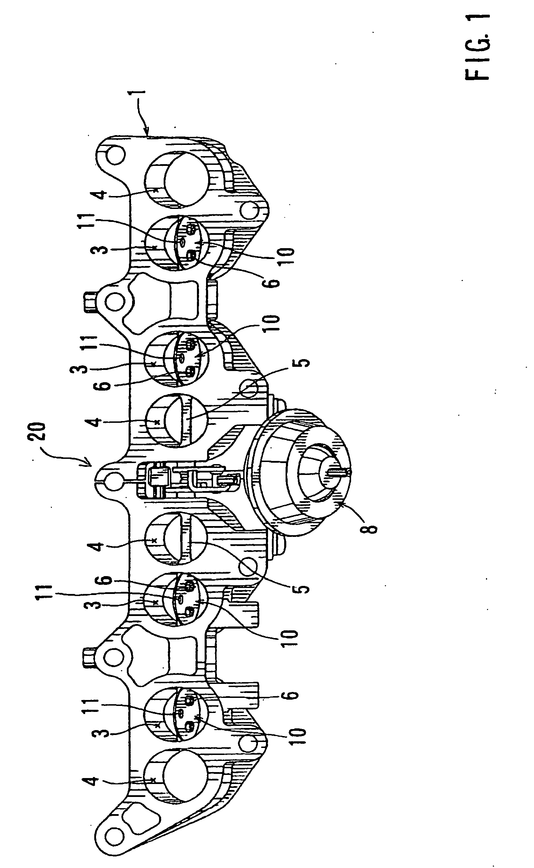

A first representative intake air control device 20 will now be described with reference to FIGS. 1 to 4. The basic construction of the first representative intake air control device 20 may be the same or substantially the same as known devices, such as the intake air control device taught by Japanese Laid-Open Publication No. 5-133234, on which the preamble of claim 1 is based. Therefore, the basic construction will be described in brief.

A front view of the first representative intake air control device 20 is shown in FIG. 1. The intake air control device 20 preferably includes a valve body 1 that is arranged and constructed to be disposed between a cylinder head of an internal combustion engine (not shown) and an intake manifold (not shown). Four pairs of intake ports 3 and 4 may communicate with corresponding cylinders (not shown) of the engine and may serve as intake air channels. Right and left valve shafts 5 may extend through the valve body 1 and may be supported by the valve body 1 such that the valve shafts 5 can rotate about the same axis.

The intake ports 3 may serve as high-speed side intake ports. A valve member 10 may be disposed within each intake port 3 and may have a substantially circular disk-shaped configuration. The valve member 10 may be attached to the corresponding valve shaft 5 by means of screws 6. An actuator 8 that is disposed centrally with respect to the valve body 1 may reciprocally rotatably drive the valve shafts 5. Therefore, the valve member 10 is operable to open and close the corresponding intake port 3.

The intake ports 4 may serve as low-speed side intake ports. No valve member is disposed within the intake port 4.

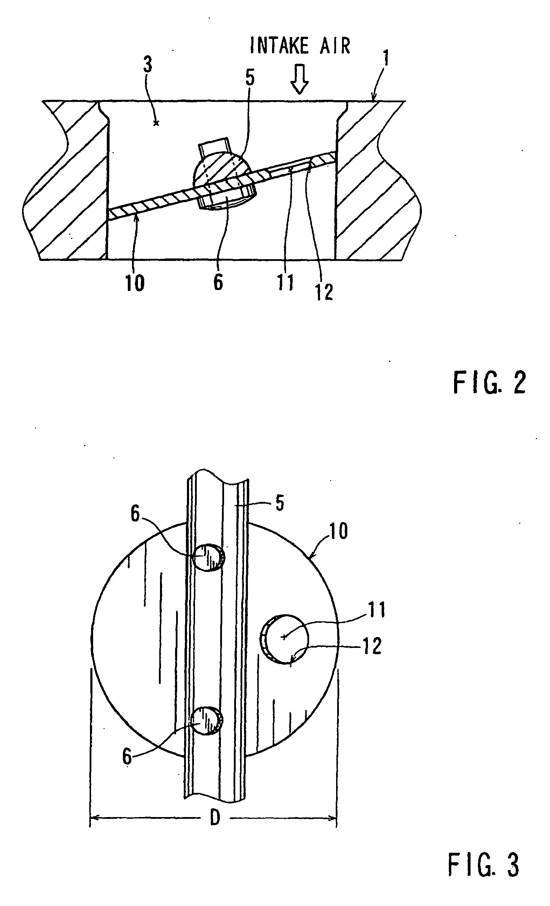

Referring to FIGS. 2 and 3, a substantially circular orifice 11 may be defined within each valve member 10. For example, the orifice 11 may be defined substantially in the center of the upstream-side side portion of the valve member 10 with respect to the corresponding valve shaft 5. The upstream-side side portion may be an upper and left side half portion of the valve member 10 as viewed in FIG. 3.

A representative configuration of the orifice 11 will be described in more detail with reference to FIG. 4. For example, the orifice 11 may define a central axis A that extends substantially perpendicular to the top and bottom surfaces of the valve member 10. A circumferential wall 12 of the orifice 11 may include a straight inclined wall surface 12a defined on an upstream side of the orifice 11. In this case, the cross-sectional area (size) of the orifice 11 at the portion of the orifice 11 that is defined by the inclined wall surface 12a will decrease in the direction toward the downstream side. The straight inclined wall surface 12a may also be referred to as a beveled surface 12a or a chamfered surface 12a. Thus, the circumferential wall 12 preferably tapers toward the downstream side along the inclined wall surface 12a. The inclined wall surface 12a may extend over the entire circumferential length of the circumferential wall 12 in a manner like a chamfered edge. Thus, the cross-sectional area (size) of the orifice 11 may gradually decrease toward the downstream side along the inclined wall surface 12a.

The portion of the circumferential wall 12 of the orifice 11 that is downstream of the inclined wall surface 12a may be defined as a straight cylindrical wall surface 12b that is connected to the downstream side edge or a minimum diameter edge of the inclined wall surface 12a. In one representative embodiment, the orifice 11 may be formed within the valve member 10 by (1) countersinking the inclined wall portion 12a and then (2) drilling the cylindrical wall 12b.

In the representative embodiment shown in FIG. 3, the outer diameter D of the valve member 10 may be 25.5 mm. The thickness t of the valve member 10, as indicated in FIG. 4, may be 1.0 mm. The diameter d of the orifice 11 may be 4.8 mm. The dimension of the inclined wall portion 12a may be C0.4. Herein, C0.4 indicates that the inclined wall portion 12a is inclined or chamfered by an angle of θ = 45° and each of the length a in the diametrical direction and b in the axial direction of the orifice 11 is 0.4 mm.

According to the first representative intake air control device 20, when the valve member 10 is fully closed, the intake air flows through the corresponding intake port 3 via the orifice 11 formed in the valve member 10. Because the circumferential wall 12 of the orifice 11 includes the inclined wall surface 12a, which extends linearly in cross section, the cross-sectional area (size) of the orifice 11 decreases toward the downstream side from the upstream side.

Therefore, the inclined wall surface 12a may serve to increase the flow rate of the intake air that flows through the orifice 11. The present inventors have performed several comparative experiments to access the effect of the inclined wall surface 12a. The experimental results indicated that the flow rate of intake air that. flows through orifice 11 having the circumferential wall 12 with the inclined wall surface 12a is 5 m/s. In comparison, under the same conditions, the flow rate of intake air that flows through orifice 111 having the straight circumferential wall 112 of the known device shown in FIG. 6 is only 1 m/s. Thus, it has been confirmed that the circumferential wall 12 with the inclined wall surface 12a effectively increases the flow rate of the intake air.

Because the flow rate of the intake air that flows through the orifice 11 can be increased by utilizing the inclined wall surface 12a of the circumferential wall 12, stagnation in the intake air that flows through the orifice 11 may be minimized. Therefore, deposition of combustion products or impurities on the circumferential wall 12 may be minimized. Because the deposition of combustion products or impurities is minimized, the flow rate of the intake air will not decrease during operation (i.e., due to deposited combustion products or impurities) and the required air flow rate(s) can be ensured even during extended operation.

In the above first representative embodiment, the inclined wall surface 12a is partially formed on the upstream side of the circumferential wall 12. However, the inclined wall surface 12a may be partially formed on the downstream side of the circumferential wall 12 or may be partially formed on an intermediate portion of the circumferential wall 12 in the axial direction. In the alternative, the inclined wall surface 12a may extend across the entire thickness of the valve member 10, i.e. along the entire length of the circumferential wall 12 in the axial direction.

### SECOND REPRESENTATIVE EMBODIMENT

A second representative intake air control device will now be described with reference to FIG. 5. The second representative intake air control device is different from the first representative intake air control device only in the configuration of the orifice defined within the valve member. Therefore, in FIG. 5, only a part of valve member 10A is shown and explanation of the other members will not be necessary.

An orifice 11A may extend through the valve member 10A and may define a central axis that is the same as the central axis A of the first representative orifice 11. The orifice 11A may include a circumferential wall 12A that is formed as a convexly curved surface in cross section along the central axis. In this case, the cross-sectional area (size) defined by the circumferential wall 12A gradually decreases in the direction from the upstream side to the downstream side. Thus, the cross-sectional area of the orifice 11A may gradually decrease toward the downstream side.

In one representative embodiment, the circumferential wall 12A may be formed by using a drill that has a drill bit 8 with a curved outer surface configured to conform to the configuration of the orifice 11A. In the alternative, the circumferential wall 12A may be formed by punching using a die of a press machine, which die also may have a curved outer surface configured to conform to the configuration of the orifice 11A. In another representative embodiment, the radius r of curvature of the circumferential wall 12A may be 3 mm.

The same effects as the first representative embodiment also may be attained by the second representative embodiment. Although the circumferential wall 12A is convexly curved in cross section along the thickness (direction) t of the valve member 10A in the second representative embodiment, the circumferential wall 12A may be partly convexly curved in cross section on any of the upstream side, the intermediate portion or the downstream side of the circumferential wall 12A. In such case, the remaining portion of the circumferential wall may include a straight cylindrical wall surface(s).

The present inventors have performed several simulations in order to analyze stagnation in the intake air with respect to the first and second representative embodiments, as well as the known device. The analysis results indicated that stagnation is significantly decreased in the first and second representative embodiments as compared to the known device.

The simulations also were performed to compare the improvements to the stagnation problem in the intake air with respect to the following valve members:
(1) the valve member 10 of the first representative embodiment,
(2) the valve member 10A of the second representative embodiment,
(3) an alternative embodiment of the valve member 10 of the first representative embodiment in which the inclined wall surface 12a is formed to extend through the thickness of the valve member 10, and
(4) an alternative embodiment of the valve member 10A of the second representative embodiment in which the circumferential wall 12A is partially convexly curved on the upstream side.

As a result, stagnation of the intake air decreased in the order of the valve members (4), (1), (3) and (2).

The present invention is not limited to the above representative embodiments and the above representative embodiment may be modified in various ways. For example, the orifice 11 (11A) of the valve member 10(10A) may have different configurations, such as elliptical configurations, polygonal configurations and/or elongated configurations, in addition to circular configurations. Further, a plurality of orifices 11(11A) may be formed in the valve member 10(10A). Furthermore, the cross-sectional area of the orifice 11(11A) may gradually decrease toward the downstream side with various cross-sectional configurations other than straight inclined configurations and convexly curved configurations.
It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention.

## Claims

1. An intake air control device (20) for an internal combustion engine, said intake air control device comprising
a valve body (1) to be disposed between a cylinder head of an internal combustion engine and an intake manifold,
at least one pair of intake ports (3, 4) being formed in said valve body serving as an intake air channel communicating with a corresponding cylinder, one (3) of said intake ports serving as a high speed intake port being provided with a rotatable valve member (10) being operable as to open and to close the corresponding intake port and being formed with at least one orifice (11) and the other (4) of said intake ports (3, 4) serving as a low speed intake port,
**characterized in that**
said orifice (11) is formed with a circumferential wall (12, 12A) that includes at least one wall portion that defines an open area decreasing in size along the direction from the upstream side to the downstream side of the valve member.

2. An intake air control device according to claim 1, wherein said rotatable valve member (10) is formed with a substantially circular orifice (11) located substantially centrally in an upstream-side side portion of said valve member (10) with respect to a rotational axis of said valve member.

3. An intake air control device as in claim 1 or 2, wherein the wall portion (12a) defines a beveled surface as viewed in a cross-sectional view along a central axis of the orifice (11).

4. An intake air control device according to claim 3, wherein an outer diameter (D) of the valve member (10) is 25.5 mm, a thickness (t) of the valve member (10) is 1.0 mm, a diameter (d) of the orifice (11) is 4.8 mm and the dimension of an inclined wall portion (12a) of the orifice is CO.4, wherein CO.4 indicates that the inclined wall portion (12a) is inclined or chamfered by an angle of θ = 45° and each its length a in the diametrical direction and b in the axial direction of the orifice (11) is 0.4 mm.

5. An intake air control device as in claim 3, wherein the beveled surface extends along the entire thickness of the valve member (10) along the central axis of the orifice (11).

6. An intake air control device as in claim 1 or 2, wherein the wall portion defines a convexly curved surface (12A) as viewed in a cross-sectional view along a central axis of the orifice (11A).

7. An intake air control device as in claim 6, wherein the convexly curved surface (12A) extends along the entire thickness of the valve member (10A) along the central axis of the orifice (11A).

## Patentansprüche

1. Ansaugluftsteuervorrichtung (20) für einen Verbrennungsmotor, enthaltend:
einen Ventilkörper (1) zur Anordnung zwischen einem Zylinderkopf eines Verbrennungsmotors und einem Ansaugrohr,
zumindest ein Paar von Einlassöffnungen (3, 4) die in dem Ventilkörper ausgeformt sind und
als ein Ansaugluftkanal dienen, der mit einem entsprechenden Zylinder in Verbindung stehen, wobei eine (3) der Eingangsöffnungen als eine Hochgeschwindigkeits-Einlassöffnung dient, die mit einem drehbaren Ventilelement (10) ausgestattet ist, das betätigt werden kann, um die entsprechende Einlassöffnung zu öffnen und zu schließen, und das mit zumindest einer Öffnung (11) versehen ist, und die andere (4) der Einlassöffnungen (3, 4) als eine Niedergeschwindigkeits-Einlassöffnung dient,
**dadurch gekennzeichnet, dass**
die Öffnung (11) mit einer Umfangswand (12, 12A) ausgebildet ist, die zumindest einen Wandbereich enthält, der einen offenen Bereich definiert, dessen Größe entlang der Richtung von der strömungsaufwärtigen Seite zur strömungsabwärtigen Seite des Ventilelements abnimmt.

2. Ansaufluftsteuervorrichtung nach Anspruch 1, wobei das drehbare Ventilelement (10) mit einer im Wesentlichen kreisförmigen Öffnung (11) ausgeformt ist, die im Bezug auf eine Drehachse des Ventilelements im Wesentlichen zentral in einem strömungsaufwärtigem Bereich des Ventilelements (10) angeordnet ist.

3. Ansaugluftsteuervorrichtung nach Anspruch 1 oder 2, wobei der Wandbereich (12a), im Querschnitt entlang einer zentralen Achse der Öffnung (11) gesehen, eine schräge Fläche definiert.

4. Ansaugluftsteuervorrichtung nach Anspruch 3, wobei ein Außendurchmesser (D) des Ventilelements (10) 25,5 mm beträgt, eine Dicke (t) des Ventilelements (10) 1,0 mm beträgt, ein Durchmesser (d) der Öffnung (11) 4,8 mm beträgt, und die Abmessung eines schrägen Wandbereichs (12a) der Öffnung C0,4 ist, wobei C0,4 angibt, dass der schräge Wandbereich (12a) um einen Winkel von θ = 45° geneigt oder abgeschrägt ist, und jede seiner Längen a in der diametrischen Richtung und b in der axialen Richtung der Öffnung (11) 0,4 mm beträgt.

5. Ansaugluftsteuervorrichtung nach Anspruch 3, wobei sich die schräge Fläche entlang der gesamten Dicke des Ventilelements (10) entlang der zentralen Achse der Öffnung (11) erstreckt.

6. Ansaugluftsteuervorrichtung nach Anspruch 1 oder 2, wobei der Wandbereich, im Querschnitt entlang einer zentralen Achse der Öffnung (11A) gesehen, eine konvex gebogene Fläche (12A) definiert.

7. Ansaugluftsteuervorrichtung nach Anspruch 6, wobei sich die konvex gebogene Fläche (12A) entlang der gesamten Dicke des Ventilelements (10A) entlang der zentralen Achse der Öffnung erstreckt.

## Revendications

1. Dispositif de commande de l'air d'admission (20) pour un moteur à combustion interne, ledit dispositif de commande de l'air d'admission comprenant
un corps de soupape (1) devant être disposé entre une culasse d'un moteur à combustion interne et un collecteur d'admission,
au moins une paire d'orifices d'admission (3, 4) formés dans ledit corps de soupape servant de canal d'air d'admission communiquant avec un cylindre correspondant, un (3) desdits orifices d'admission servant d'orifice d'admission haute vitesse, qui est doté d'un élément de soupape rotatif (10) utilisable pour ouvrir et fermer l'orifice d'admission correspondant et formé avec au moins un orifice (11) et l'autre (4) desdits orifices d'admission (3, 4) servant d'orifice d'admission basse vitesse,
**caractérisé en ce que**
ledit orifice (11) est formé d'une paroi circonférentielle (12, 12A) qui comprend au moins une partie de paroi qui définit une zone ouverte ayant une taille décroissante le long de la direction s'étendent depuis le côté amont vers le côté aval de l'élément de soupape.

2. Dispositif de commande de l'air d'admission selon la revendication 1, dans lequel ledit élément de soupape rotatif (10) est formé avec un orifice sensiblement circulaire (11) situé de façon sensiblement centrale dans une partie latérale du côté amont dudit élément de soupape (10) par rapport à un axe de rotation dudit élément de soupape,

3. Dispositif de commande de l'air d'admission selon la revendication 1 ou 2, dans lequel la partie de paroi (12a) définit une surface biseautée, selon une vue en coupe le long de l'axe central de l'orifice (11).

4. Dispositif de commande de l'air d'admission selon la revendication 3, dans lequel un diamètre externe (D) de l'élément de soupape (10) est de 25,5 mm, une épaisseur (t) de l'élément de soupape (10) est de 1,0 mm, un diamètre (d) de l'orifice (11) est de 4,8 mm et la dimension de la partie de paroi inclinée (12a) de l'orifice est de C0,4, où C0,4 indique que la partie de paroi inclinée (12a) est inclinée ou chanfreinée d'un angle de θ = 45° et que chacune de ses longueurs dans la direction diamétrale a et dans la direction axiale b de l'orifice (11) est de 0,4mm.

5. Dispositif de commande de l'air d'admission selon la revendication 3, dans lequel la surface biseautée s'étend le long de toute l'épaisseur de l'élément de soupape (10) le long de l'axe central de l'orifice (11).

6. Dispositif de commande de l'air d'admission selon la revendication 1 ou 2, dans lequel la partie de paroi définit une surface incurvée de façon convexe (12A) telle qu'observée en vue en coupe le long d'un axe central de l'orifice (11A).

7. Dispositif de commande de l'air d'admission selon la revendication 6, dans lequel la surface incurvée de façon convexe (12A) s'étend le long de toute l'épaisseur totale de l'élément de soupape (10A) le long de l'axe central de l'orifice (11A).
